# EUROPEAN PATENT APPLICATION

(11) **EP 4 807 174 A1**
(43) Date of publication of application: **16.09.2026**
(21) Application number: 25163248.5
(22) Date of filing: 12.03.2025
(51) Int. Cl.: F03D 13/10, F03D 13/40

(54) **AN ARRANGEMENT FOR INSTALLATION AND/OR TRANSPORT OF A PLURALITY OF TOWERS AND A METHOD FOR MITIGATING A WIND-INDUCED VIBRATIONS ON TOWERS DURING THE INSTALLATION OF WIND TURBINES**

(71) Applicant: Siemens Gamesa Renewable Energy A/S, 7330 Brande (DK)
(72) Inventor: Giusti, Alessandro, 7100 Vejle (DK); Zareba, Witold, 7100 Vejle (DK); Torrielli, Alessio, 8382 Hinnerup (DK)
(74) Representative: SGRE-Association

(57) **Abstract**

An arrangement for installation and/or transport of a plurality of towers and a method for mitigating a wind-induced vibrations on towers during the installation of wind turbines.

An arrangement for installation and/or transport of a plurality of towers comprising at least one permeable membrane and a plurality of towers is provided. The permeable membrane is securely fixed to at least a pair of towers.

Furthermore, a method for mitigating wind-induced vibrations, e.g. aeroelastic phenomena, on towers during installation and/or transport is provided. The method comprising the steps of arranging a plurality of towers side by side, thereby forming a tower group, positioning a permeable membrane to a first tower and a second tower of the group of towers, such that the permeable membrane is fixedly secured to an upper portion of the first and second towers, such that the permeable membrane extends therebetween the first and the second tower.

## Description

### FIELD OF THE INVENTION

The present invention relates to an arrangement for installation and/or transport of a plurality of towers.

More specifically, the invention relates to a permeable membrane positioned between each pair of towers of the plurality of towers. Furthermore, the invention relates to a method for mitigating wind-induced vibrations, e.g. due to aeroelastic phenomena, on towers during installation and/or transport.

### BACKGROUND OF THE INVENTION

The invention focuses on wind-induced vibrations on towers when they stand at the harbor quayside or on the deck of the installation vessel, remarkably relevant during the installation phase of offshore wind farms. The wind-induced vibrations, and in particular vibrations related to vortex shedding, namely vortex induced vibrations (VIV), and interference galloping, are more and more affecting the strength design and fatigue life of components of a wind turbine.

In case of split tower installation, i.e., when the tower is vertically assembled and/or transported in more than one segments, the expected base bending moment due to VIV or interference galloping is expected to be up to four-five times larger than the moment due to gust buffeting. The magnitude of the moment is also affected by the ratio of center-to-center distance to the equivalent diameter of the tower. The ratio values associated used on towers tend to magnify VIV and interference galloping loads.

According to the state of the art, different mitigation measures against VIV are known, namely helical strakes, laminated elastomeric bearings (LEBs), tuned liquid dampers (TLDs), or similarly tuned mass dampers (TMDs). It is known to mount helical strakes (spoilers) on the top third of towers to prevent large VIV when towers are erected at the harbor quayside.

A typical disadvantage of such known helical strakes is that dedicated lifting operations for mounting/dismounting are required, typically performed by the installation vessel crane and subjected to restricted weather conditions, and therefore time consuming. Other drawbacks are the risk of tower scratching, uncertain effectiveness especially when the helical strakes are light or small. Furthermore, safety issues due to the involvement of operators at the base of the tower with taglines.

Another known solution is the laminated elastomeric bearings (LEBs) designed to soften the tower foundation connection to lower the first natural frequency of the tower and therefore have controlled VIV. The nonlinearity of the connection and the additional damping introduced in the system are additional features of the LEB system that contribute to its efficiency. However, the LEB system has the disadvantage of being inefficient against interference galloping, and they even make it worse lowering the critical wind velocity.

Temporary TLDs with adjustable tuning frequency, able to be performant at the quayside and on the vessel, have been recently applied to overcome the inefficiency of LEB based solution against interference galloping. Nevertheless, at least 5-6 units are needed to cover simultaneously all towers on the vessel deck, and even more if needed to mitigate vibrations at the quayside. Moreover, TLDs need dedicated time-consuming lifting operations for mounting/dismounting.

It is therefore an object of the disclosure to overcome at least some drawbacks mentioned above, in particular to mitigate wind-induced vibrations on towers during installation and/or transport.

### SUMMARY OF THE INVENTION

The object of the invention is achieved by the independent claims. The dependent claims describe advantageous developments and modifications of the invention.

In accordance with the invention there is provided an arrangement for installation and/or transport of a plurality of towers. The arrangement comprises at least one permeable membrane and a plurality of towers arranged side by side forming a group. The permeable membrane is securely fixed to at least a pair of towers, in particular in an upper portion of each tower, wherein the permeable membrane extends therebetween the pair of towers.

By having a permeable membrane securely fixed between a pair of towers, the aerodynamic is changed and the steadiness of the vortex shedding around the circular cross-section of the towers is disrupted, thereby eliminating or significantly reducing the development of aeroelastic phenomena e.g., VIV and interference galloping.

In an example, the plurality of towers comprises at least two towers. Each pair of towers comprise a permeable membrane securely fixed between said pair of towers, in particular in an upper portion of each tower, thus the permeable membrane extends therebetween the pair of towers.

By having a permeable membrane securely fixed between each pair of towers, the aerodynamic is changed and the steadiness of the vortex shedding around the circular cross-section of the towers is disrupted, thereby eliminating or significantly reducing the development of aeroelastic phenomena like VIV and interference galloping. A further advantage is that the static scheme of the cantilever towers will change because of the presence of the permeable membrane which will act as a spring coupling towers together. These advantages are applicable regardless the number of towers of the group.

In an example, the permeable membrane may be made of a porous material.

By having a permeable membrane of a porous material, the airflow is allowed to pass through the permeable membrane, thereby the gust buffeting of the downwind towers may be reduced by the transformation of large size environmental vortexes into smaller size vortexes, in the wake of the membrane itself.

In an example, the permeable membrane may be made of a natural and/or synthetic material.

In an example, the synthetic material may be any of polyester, polypropylene, and polyamide. Other synthetic materials may be used.

In an example, the permeable membrane may be a tissue or a braiding of ropes and cables.

By having a structure of a tissue or a braid, the permeable membrane may be more resistance and durable.

In an example, the permeable membrane may be a mesh.

In an example, the mesh may be solid, fine, or coarse mesh.

By having a solid mesh, the wind cannot pass through the mesh, on the contrary, it actuates as a barrier against the wind; in case of a fine mesh, it allows a small amount of wind to pass through the mesh. A course mesh will allow the wind to pass through it more easily.

By having a structure of a mesh, the permeable membrane may be more resistance and durable.

In an example, the mesh may be heterogeneous with a vertical or horizontal orientation.

By having an heterogenous mesh, the control and modulation of the drag force associated with the more exposed area to wind is improved. The more solid the permeable membrane, the higher the wind drag force. Thereby, a heterogeneous membrane is used to interfere the wind flow as necessary to mitigate wind-induced vibrations.

In an example, the arrangement may comprise a hoisting mechanism, in particular said hoisting mechanism may comprise ropes and pulleys.

By having a hoisting mechanism made of ropes and pulleys, the mounting and dismounting operation of the permeable membrane is easier and faster.

In accordance with a second aspect of the invention there is also provided a vessel for transporting a plurality of towers. The vessel comprises a deck for supporting the plurality of towers, means for securing each tower to prevent movement of the towers along the deck during transport, and the arrangement for installation of the first embodiment.

By having the arrangement for installation in the vessel during transportation of the towers, the aerodynamic is changed and the steadiness of the vortex shedding around the circular cross-section of the towers is disrupted, thereby eliminating or significantly reducing the development of aeroelastic phenomena like VIV and interference galloping. A further advantage is that the static scheme of the cantilever towers will change because of the presence of the permeable membrane which will act as a spring coupling towers together.

In accordance with a third aspect of the invention there is also provided a method for mitigating wind-induced vibrations on towers during installation and/or transport. The method comprises the steps of:
a) arranging a plurality of towers side by side, thereby forming a tower group,
b) positioning a permeable membrane to a first tower and a second tower of the group of towers, such that the permeable membrane is fixedly secured to an upper portion of the first and second towers, such that the permeable membrane extends therebetween the first and the second tower.

By positioning the permeable membrane simultaneously on the first and second tower of the group of towers, the permeable membrane is positioned faster.

In an example, the positioning of step b) may comprise hoisting the permeable membrane to the upper portion of the tower.

By hoisting the permeable membrane to the upper portion, mounting and dismounting operations at height are avoided.

In accordance with a fourth aspect of the invention there is also provided a permeable membrane for use with the arrangement installation of the first embodiment.

In accordance with a fifth aspect of the invention there is also provided a storage facility for storing the arrangement installation of the first embodiment in a designated place such as sheltered bays, quaysides, or laydown areas. The storage facility comprises storage racks or platforms configured to firmly secure the plurality of towers, at least one permeable membrane and the arrangement installation.

Advantageous configurations and embodiments of the invention have been described in the preceding sections. The advantageous features of the arrangement, method and permeable membrane can generally be combined in any technically feasible manner unless otherwise stated.

### BRIEF DESCRIPTION OF THE DRAWINGS

Embodiments of the invention are now described, by way of example only, with reference to the accompanying drawings, of which:
- Figure 1a and 1b: shows a plurality of towers (10, 20, 30, 40) with a permeable membrane (100, 101, 102, 103) securely fixed to each pair of towers;
- Figure 2: shows a permeable membrane: a) with a solid mesh, b) tiny mesh, c) course mesh, d) heterogeneous mesh with vertical orientation, e) heterogeneous mesh with horizontal orientation; and
- Figures 3a: shows an arrangement for installation and/or transport, where the permeable membrane (100) is pulled up to the upper part of the pair of towers (10, 20).
- Figures 3b: shows an arrangement for installation and/or transport, where the parts of the permeable membrane (100) arranged to the pair of towers (10, 20) are joined together.

The illustration in the drawings is in schematic form. It is noted that in different figures, similar or identical elements may be provided with the same reference signs.

### DESCRIPTION OF THE DRAWINGS

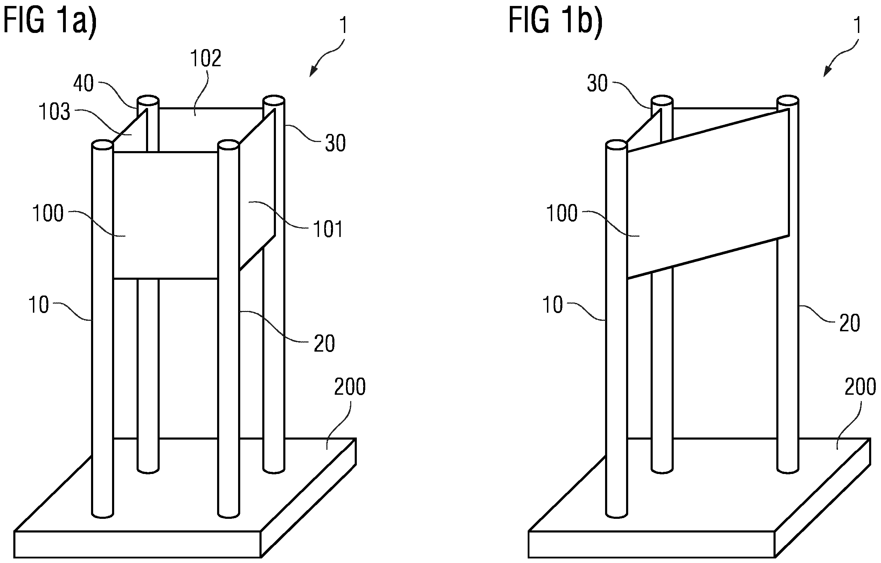

Fig. 1a shows a plurality of towers (10, 20, 30, 40) arranged at the harbor quayside or on the deck of the installation vessel in a foundation (200). The plurality of towers (10, 20, 30, 40) is comprised by at least two towers (10, 20). The plurality of towers (10, 20, 30, 40) are positioned next to each other when they stand. The plurality of towers (10, 20, 30, 40) are arranged next to each other in a square formation. A permeable membrane (100, 101, 102, 103) is arranged between each pair of towers (10, 20, 30, 40), in the upper part of the towers (10, 20, 30, 40). The static scheme of the cantilever towers will change because of the presence of the permeable membrane which will act as a spring coupling towers together.

The term installation includes all stages after manufacturing, including but not limiting to port quayside activities, offshore activities and transport.

Fig. 1a illustrates three towers (10, 20, 30) arranged in a tower foundation (200). The plurality of towers (10, 20, 30) are arranged next to each other in a triangular formation. A permeable membrane (100, 101, 102) is arranged between each pair of towers (10, 20, 30), in particular in the upper part of the towers (10, 20, 30).

In the example where the plurality of towers is comprised by two towers, preferably, the membrane is positioned against the wind flow, meaning that it is against the wind flow or optionally essentially perpendicular to the wind flow.

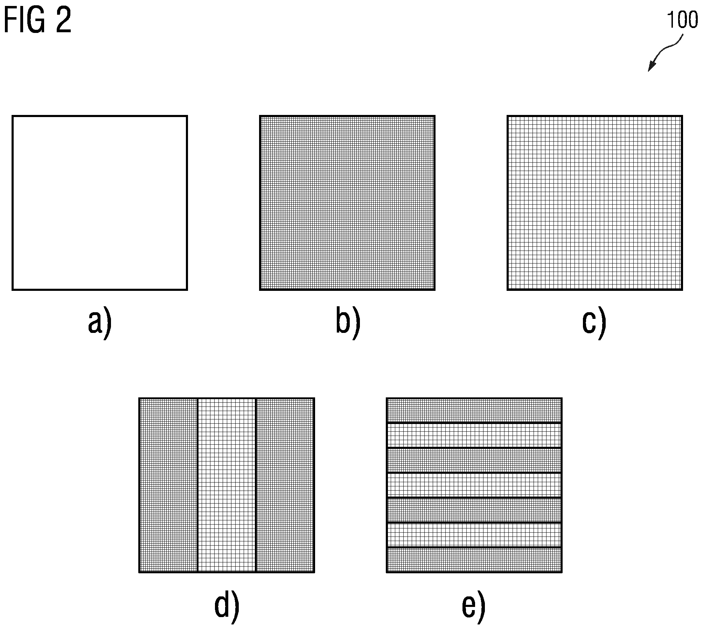

Fig. 2 shows the permeable membrane (100). Fig 2a shows a permeable membrane with a solid mesh, solid mesh means that the mesh with no openings, e.g. a permeable membrane made of a synthetic material.

Fig 2b shows a permeable membrane made of a fine mesh, fine mesh means that is made of a material with an open texture with very small openings or apertures. Fig 2c is a permeable membrane with a coarse mesh, coarse mesh means that is made of a material with an open texture with bigger openings or apertures.

Fig 2d shows a heterogeneous mesh with vertical orientation, the permeable membrane is made of a combination of heterogeneous parts with vertical orientation, the first part of the permeable membrane is made of a fine mesh with small openings, the second part of the mesh is made of a coarse mesh with bigger openings and the other part is made of fine mesh.

Fig 2e shows a permeable membrane made of a combination of heterogeneous parts with horizontal orientation. The parts of the mesh alternates fine mesh and course mesh.

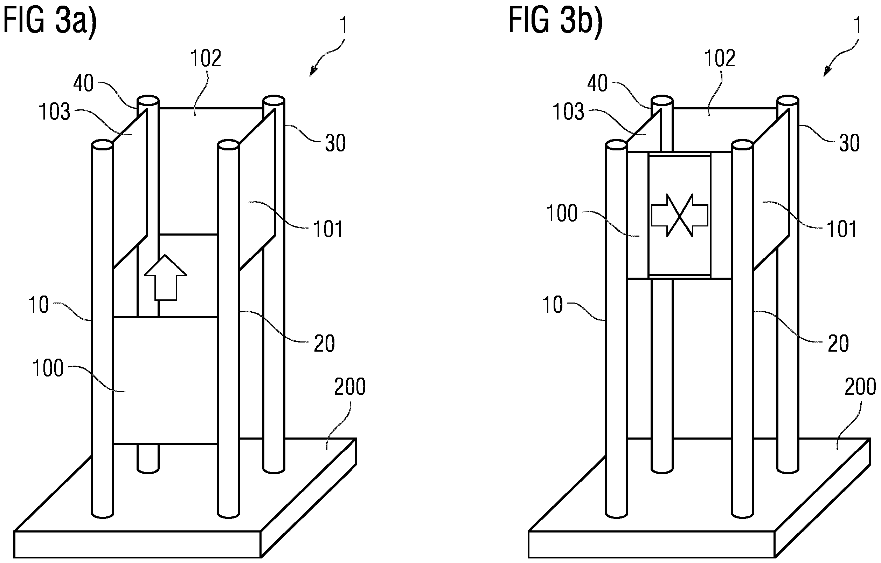

Fig 3a shows the plurality of towers (10, 20, 30, 40) arranged in a tower foundation (200) with one permeable membrane (100, 101, 102, 103) arranged between each pair of towers (10, 20, 30, 40). The permeable membrane (100) is arranged to the towers (10, 20) and is being pulled up from the lower part of the towers (10, 20) to the upper part, like a curtain system.

The ends of the permeable membranes (100, 101, 102, 103) are arranged to the corresponding pair of towers (10, 20, 30, 40) by mechanical means e.g. rings and hooks. Alternatively, the permeable membranes (100, 101, 102, 103) can be glued to the towers (10, 20, 30, 40).

Fig 3b shows the plurality of towers (10, 20, 30, 40) arranged in a tower foundation (200) with one permeable membrane (100, 101, 102, 103) arranged between each pair of towers (10, 20, 30, 40). The permeable membrane (100) is split in two parts and each part is arranged to one tower (10, 20) in the upper part. The two parts of the permeable membrane (100) are attracted to each other to join together.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. An arrangement (1) for installation and/or transport of a plurality of towers (10, 20, 30, 40) comprising:
- at least one permeable membrane (100),
- a plurality of towers (10, 20, 30, 40) arranged side by side forming a group,
wherein the permeable membrane (100) is securely fixed to at least a pair of towers, in particular in an upper portion of each tower, wherein the permeable membrane (100) extends therebetween the pair of towers.

2. The arrangement according to claim 1, wherein the plurality of towers (10, 20, 30, 40) comprises at least two towers, wherein each pair of towers comprise a permeable membrane (100) securely fixed between said pair of towers, in particular in an upper portion of each tower, wherein the permeable membrane (100) extends therebetween the pair of towers.

3. The arrangement according to claim 1 and 2, wherein the permeable membrane (100) is made of a porous material.

4. The arrangement according to claim 3, wherein the permeable membrane (100) is made of a natural and/or synthetic material.

5. The arrangement according to claim 4, wherein the synthetic material is any of polyester, polypropylene, and polyamide.

6. The arrangement according to any of the previous claims, wherein the permeable membrane (100) is a tissue or a braiding of ropes and cables.

7. The arrangement according to any of the previous claims, wherein the permeable membrane (100) is a mesh.

8. The arrangement according to claim 7, wherein the mesh is solid, fine, or coarse mesh.

9. The arrangement according to claims 7 and 8, wherein the mesh is heterogeneous with a vertical or horizontal orientation.

10. The arrangement according to claim 1, comprising a hoisting mechanism, in particular said hoisting mechanism comprising ropes and pulleys.

11. A vessel for transporting a plurality of towers, the vessel comprising:
- a deck for supporting the plurality of towers,
- means for securing each tower to prevent movement of the towers along the deck during transport,
- the arrangement according to any one of claims 1 to 10.

12. A method for mitigating wind-induced vibration on towers during installation and/or transport, comprising:
a) arranging a plurality of towers side by side, thereby forming a tower group,
b) positioning a permeable membrane to a first tower and a second tower of the group of towers, such that the permeable membrane is fixedly secured to an upper portion of the first and second towers, such that the permeable membrane extends therebetween the first and the second tower.

13. A method according to claim 12, wherein the positioning comprises hoisting the permeable membrane to the upper portion of the tower.

14. A permeable membrane for use with the arrangement of claim 1.

15. A storage facility for storing the arrangement of claim 1, in a designated place such as sheltered bays, quaysides, or laydown areas, the storage facility comprising:
- storage racks or platforms configured to firmly secure the plurality of towers (10, 20, 30, 40)
- at least one permeable membrane (100, 101, 102, 103), and
- the arrangement according to any one of claims 1 to 10.
